# EUROPEAN PATENT SPECIFICATION

(11) **EP 4 080 862 B1**
(45) Date of publication and mention of the grant of the patent: **10.07.2024**
(21) Application number: 21799956.4
(22) Date of filing: 30.04.2021
(51) Int. Cl.: H04M 1/72451, G08B 21/24, G06F 40/30, H04M 1/72454

(54) **INTELLIGENT REMINDING METHOD AND DEVICE**
INTELLIGENTES ERINNERUNGSVERFAHREN UND -VORRICHTUNG
PROCÉDÉ ET DISPOSITIF DE RAPPEL INTELLIGENT

(30) Priority: 06.05.2020 CN 202010380842
(43) Date of publication of application: 26.10.2022
(73) Proprietor: Honor Device Co., Ltd., Shenzhen, Guangdong 518040 (CN)
(72) Inventor: HUANG, Liwei, Shenzhen, Guangdong 518040 (CN)
(74) Representative: Maiwald GmbH
(86) International application number: PCT/CN2021/091544
(87) International publication number: WO 2021/223681

(56) References cited:
- CN-A- 106 791 068
- CN-A- 107 368 995
- US-A1- 2009 106 365
- US-A1- 2010 153 505
- US-A1- 2015 169 696
- US-A1- 2016 248 865
- US-A1- 2016 335 572

## Description

This application claims priority to Chinese Patent Application No. 202010380842.X, filed with the China National Intellectual Property Administration on May 6, 2020 and entitled "INTELLIGENT REMINDING METHOD AND DEVICE".

### TECHNICAL FIELD

This application relates to the field of artificial intelligence technologies, and in particular, to an intelligent reminding method and device based on semantic analysis.

### BACKGROUND

Currently, because a user has a lot of various communication software, the massive amount of information is often such enormous that the user forgets to process the information. The user usually first looks through all the unread information, and deals with the unread information later. However, there are usually a lot of unprocessed tasks that are forgotten.

Existing electronic devices commonly used by the user such as a mobile terminal, a tablet computer, and a computer also allow the user to set reminders for unprocessed tasks. However, the reminding function needs to be manually set by the user, and reminding is not performed according to a condition of processing the task by the user, and the reminding function is low in intelligence.
US 2016/0248865 A1 describes providing personalized notifications to a user. The notifications correspond to events, which can include information items, unaddressed or unnoticed by a user. The unaddressed events may be determined based on sensor data provided by a user device associated with the user including user activity pattern information. Further, an urgency level of the unaddressed event and user availability for responding to the event may be determined The availably may comprise a model with score(s) corresponding to the user's capability for carrying out tasks associated with addressing the event. Additionally, notification content may be generated based on information about availability and the unaddressed event, and used to provide notification(s). The notification content may include a recommendation to present a notification to the user at a time determined likely to be convenient for the user to be notified of the event or where the user likely has capacity to address the event appropriately.
CN 106 791068 A describes a reminding method for a backlog and a terminal. The method is applied to a first terminal. The method comprises the steps of when a communication message is received, judging whether the communication message is a first reminding message or not, wherein the first reminding message is the message which comprises a preset first keyword and is used for reminding the backlog; if the communication message is the first reminding message, obtaining information of a preset item related to the backlog from the communication message; sending a first message to a second server; in an appointed time period before the deadline of the backlog reaches, judging whether a second reminding message for reminding that the backlog is finished is received or not; and if the second reminding message is not received, reminding the backlog at preset time according to the first reminding message. US 2016/335572 A1 describes a system that analyses content of electronic communications may automatically detect requests or commitments from the electronic communications. In one example process, a processor may identify a request or a commitment in the content of the electronic message; based, at least in part, on the request or the commitment, determine an informal contract; and execute one or more actions to manage the informal contract, the one or more actions based, at least in part, on the request or the commitment.
US 2009/106365 A1 describes providing conditional reminders for electronic messages. The solution can identify an electronic message conveyed from a sender to a recipient, wherein the electronic message is an email message or text exchange message. A software program can determine a response time and a response condition for the electronic message. When the response time expires and when the response condition is unsatisfied, a software program can present a reminder to the sender and/or the recipient, where the reminder indicates that a response is due. When a software program detects a recipient action that satisfies the response condition before the response time expires, no reminder will be presented to either the sender or the recipient.
CN 107 368 995 A describes a task processing method that can comprise the steps of monitoring a task event initiated by a task initiator, wherein the initial state of the task event is a to-be-accepted state; and switching the task event from the to-be-accepted state to an activated state when a preset user response behavior is detected, wherein the preset user response behavior is initiated in allusion to a first reminding operation of the task event.

### SUMMARY

This application provides an intelligent reminding method and device, which can determine whether to remind a user according to an actual condition of processing a task by the user, thereby improving the intelligence of the reminding. The invention is set out in the appended claims.

A first aspect of this application provides an intelligent reminding method, applicable to a first electronic device, and including:
receiving a message sent by a second electronic device, where the message is a first message received by a first application, and the first message includes a task that needs to be processed by a first user;
determining whether there is first interaction information in the first electronic device, where an occurrence time of the first interaction information is later than a time point when the first message is received, and an interaction object of the first interaction information is a second user operating the second electronic device; and
presenting reminding information in a case that there is not the first interaction information in the first electronic device, where the reminding information is used for reminding the first user that the task is not completed.

In the intelligent reminding method provided in the first aspect of this application, after the first message from the second user is received, the first electronic device automatically determines whether the first user interacts with the second user after the first user receives the first message. If the first user does not interact with the second user after the first user receives the first message, the reminding information is presented to the first user to remind the user that the task in the first message is not completed. By determining the user interaction, repeatedly reminding the user can be avoided in a case that the first user has completed the task, so that the effectiveness of the reminding is improved and the message reminding is more intelligent.

In a possible implementation, the first message further includes a completing time of the task, and the presenting reminding information in a case that there is not the first interaction information in the first electronic device includes:
presenting the reminding information before the completing time in a case that there is not the first interaction information in the first electronic device.

In this way, in the reminding method provided in this application, the user can be timely reminded before a task completion deadline, so that it is ensured that the user discovers a to-be-processed task before the completing time of the task, thereby preventing the omission of the task.

In a possible implementation, the method further includes: further determining whether the first interaction information includes a first keyword related to the task in a case that there is the first interaction information in the first electronic device; and
presenting the reminding information in a case that the first interaction information does not include the first keyword.

In this way, in the reminding method provided in this application, it is further determined whether the first interaction information is related to the task included in the first message. If the interaction between the first user and the second user is not about the task, then the user is still reminded that there is a to-be-processed task. The solution reduces a risk of misjudgment of a device and enhances the effectiveness of the task reminding.

In a possible implementation, the determining whether there is first interaction information in the first electronic device includes:
searching for whether there is the first interaction information in the first application.

In this way, in the reminding method provided in this application, it can be found out whether the first user interacts with the second user in an application that receives a message. When it is determined that the user has completed the task by the first application, reminding for the task is not performed again, so as to avoid repeatedly reminding the user.

In a possible implementation, the determining whether there is first interaction information in the first electronic device includes:
searching for whether there is the first interaction information in a second application.

In this way, in the reminding method provided in this application, interaction information may be searched for in a plurality of applications in the electronic device, so that by traversing and retrieving all applications that may perform interaction in the device, occurrence of the interaction may be more fully and comprehensively determined.

In a possible implementation, in a case that there is not the first interaction information in the first electronic device, the method further includes:
determining whether there is the first interaction information in a third electronic device; and
presenting the reminding information in a case that there is not the first interaction information in the third electronic device either, where the reminding information is used for reminding the first user that the task is not completed.

In this way, in the reminding method provided in this application, interaction information may be searched for in a plurality of electronic devices of the user according to an actual situation in which the user may have the plurality of electronic devices, so that by traversing and retrieving applications that perform interaction in all the electronic devices of the user, occurrence of the interaction may be more fully and comprehensively determined.

In a possible implementation, the first electronic device and the third electronic device are electronic devices logging in to a same user account.

Identification of the plurality of electronic devices of the user is provided by the user account, thereby facilitating search for the interaction information.

In a possible implementation, the first message does not include a completing time of the task, and it is determined whether there is the first interaction information in the first electronic device at a preset time point after the first message is received.

In this way, in a case that the task in the first message does not have a deadline for completion, a preset time may be set by the user or set by default in a system. Determining of the interaction information is triggered at the preset time, so that the omission of the task is effectively avoided.

In a possible implementation, before the determining whether there is first interaction information in the first electronic device, the method further includes:
determining whether there is a schedule reminder about the task in the first electronic device; and
determining whether there is the first interaction information in the first electronic device in a case that there is not the schedule reminder about the task in the first electronic device.

If the first user has established a schedule reminder about the task after receiving a message including the task, then there is no need to remind the user of the task. By determining the schedule reminder about the task, repeatedly reminding the user is reduced. It is determined whether to establish a schedule reminder before interaction determining, and the interaction determining is performed in a case that no schedule reminder is established, so that system power consumption and program running time can be effectively saved.

In a possible implementation, after determining whether there is first interaction information in the first electronic device, the method further includes:
determining whether there is a schedule reminder about the task in the first electronic device in a case that there is not the first interaction information in the first electronic device; and
presenting the reminding information in a case that there is not the schedule reminder about the task in the first electronic device, where the reminding information is used for reminding the first user that the task is not completed.

By determining the schedule reminder about the task, repeatedly reminding the user is reduced. It is determined whether to establish a schedule reminder after interaction determining, and then the interaction determining is performed in a case that no schedule reminder is established, so that the omission that may be caused by the interaction determining can be repaired, and repeatedly reminding the user can be more effectively avoided.

In a possible implementation, after the presenting reminding information in a case that there is not the first interaction information in the first electronic device, the method further includes:
determining whether there is a schedule reminder about the task in the first electronic device; and
skipping presenting the reminding information that is used for reminding the user that the task is not completed in a case that there is the schedule reminder about the task in the first electronic device.

For a situation in which the user has a task that needs to be processed after the interaction determining is completed, by automatically determining whether to establish a schedule reminder, the user is no longer reminded in a case that the schedule reminder has been established, so that repeatedly reminding the user can be effectively avoided and user experience is improved.

In a possible implementation, the method further includes:
displaying a second message in an input candidate box of the first application in a case that there is the first interaction information in the first electronic device, where the second message is a message that the first user is recommended to send to the second user, and the second message indicates that the task has been completed.

It is determined by the interaction determining that the first user has completed the task, which can help the first user give timely feedback to the second user in an application where a message is received. A sentence sent by automatic recommendation may further help the user give quick feedback, so that the user's time is saved and working efficiency is improved.

In a possible implementation, the task is obtained by semantic analysis, specifically including:
performing word segmentation on the first message, and segmenting out all possible words matching a lexicon;
determining an optimal segmentation result by applying a statistical language model; and
extracting keywords from a short text by using a term weighting method, to obtain the task.

In this way, keywords of the task are automatically extracted by using a semantic analysis method, which helps the user more accurately discover and manage the task.

In a possible implementation, the first message is a message that has been read but not been replied to.

In this way, the message that has been read but not been replied to lacks a message identifier and is prone to be forgotten. Performing the interaction determining on such messages effectively resolves the problem of performing task reminding for the user who has many tasks and is prone to forget the tasks.

In a possible implementation, the method further includes receiving a third message by the first application, where the third message is an unread message, and the third message includes a first identifier; and the reminding information includes a second identifier displayed on the first message, and the second identifier is different from the first identifier.

A reminder of the first message including the task is set to be different from an identifier of an unread message, so that the identification of a reminding message of an uncompleted task can be improved and the first message including the task is not prone to be confused with the unread message.

In a possible implementation, the method further includes receiving a third message by the first application, where the third message is an unread message, and the third message includes a first identifier; and the reminding information includes a second identifier displayed on the first message, and the second identifier is the same as the first identifier.

When the reminder of the first message including the task is set to be the same as the identifier of the unread message, the user can also be reminded that the task is not completed.

According to another aspect, this application provides an electronic device, including one or more processors; and a memory, where the memory stores code. When the code is executed by the electronic device, the electronic device is caused to perform the reminding method performed by the electronic device in any possible design of the foregoing aspect.

According to another aspect, this application provides a computer storage medium, including computer instructions. When the computer instructions are run on an electronic device, the electronic device is caused to perform the reminding method in any possible design of any one of the foregoing aspects.

According to another aspect, this application provides a computer program product. When the computer program product is run on a computer, the computer is caused to perform the reminding method in any possible design of any one of the foregoing aspects.

In this application, after the user receives a message, a task to be processed by the user is determined by semantic analysis of the message, and task detection is performed on the task to be processed by the user within a device (for example, each application) and across devices. In this way, it is determined whether the task has been processed by the user, and if not, the user is reminded. In the method, effective secondary reminding can be performed for a task that is not processed by the user, and repeated reminding for a task that has been processed by the user can be avoided. Therefore, the intelligence of the electronic device for the task reminding is effectively improved.

### BRIEF DESCRIPTION OF DRAWINGS

To describe the technical solutions in the embodiments of this application more clearly, the following briefly introduces the accompanying drawings required for describing the embodiments or the related art.
FIG. 1 is a schematic diagram of a hardware structure of an electronic device according to an embodiment of this application;
FIG. 2 is a block diagram of a software structure of an electronic device 100 according to an embodiment of this application;
FIG. 3 is a schematic flowchart of a reminding method according to an embodiment of this application;
FIG. 4 is a schematic flowchart of a semantic analysis method according to an embodiment of this application;
FIG. 5A, FIG. 5B, FIG. 5C, and FIG. 5D show an intelligent message reminding interface according to an embodiment of this application;
FIG. 6A and FIG. 6B are a schematic diagram of an interaction detection method within a device according to an embodiment of this application;
FIG. 7 is a schematic diagram of an interaction detection method across devices according to an embodiment of this application;
FIG. 8 shows a message input recommendation interface according to an embodiment of this application; and
FIG. 9 is a schematic structural diagram of an electronic device according to an embodiment of this application.

### DESCRIPTION OF EMBODIMENTS

Technical solutions in embodiments of this application are described below with reference to the accompanying drawings in the embodiments of this application. In description of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more than two.

The terms such as "first", "second", "third", and "fourth" in the specification and claims of the present application and in the accompanying drawings are used for distinguishing between similar objects and not necessarily used for describing any particular order or sequence. It may be understood that the data used in such a way is interchangeable in proper circumstances, so that the embodiments of this application described herein can be implemented in other sequences than the sequence illustrated or described herein. Moreover, the terms "include", "comprise" and any other variations mean to cover the non-exclusive inclusion. For example, a process, method, system, product, or device that includes a list of operations or units is not necessarily limited to those expressly listed steps or units, but may include other steps or units not expressly listed or inherent to such a process, method, system, product, or device.

Embodiments of this application provide an intelligent reminding method and device, which can determine whether to remind a user according to an actual condition of processing a task by the user, thereby improving the intelligence of the reminding. The reminding method provided in the embodiments of this application is applicable to an electronic device such as a mobile phone, a tablet computer, a wearable device, an in-vehicle device, an augmented reality (augmented reality, AR) device/virtual reality (virtual reality, VR) device, a notebook computer, an ultra-mobile personal computer (ultra-mobile personal computer, UMPC), a netbook, or a personal digital assistant (personal digital assistant, PDA), which is not limited in the embodiments of this application.

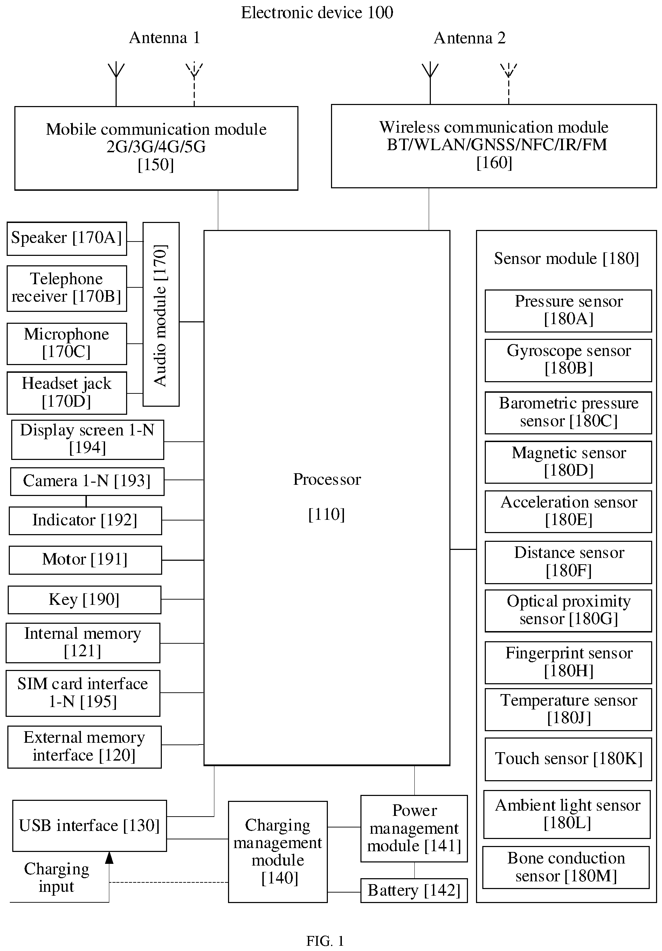

For example, FIG. 1 is a schematic structural diagram of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, and an audio module 170, a speaker 170A, a telephone receiver 170B, a microphone 170C, a headset jack 170D, a sensor module 180, a key 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like.

It may be understood that the schematic structure in this embodiment of this application constitutes no specific limitation on the electronic device 100. In some other embodiments of this application, the electronic device 100 may include more or fewer components than those shown in the figure, or some components may be combined, or some components may be split, or components are arranged in different manners. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 110, and is configured to store instructions and data. In some embodiments, the memory in the processor 110 is a cache. The memory may store an instruction or data that has just been used or cyclically used by the processor 110. If the processor 110 needs to use the instruction or the data again, the processor 110 may directly invoke the instruction or the data from the memory, to avoid repeated access and reduce a waiting time of the processor 110, thereby improving system efficiency.

In some embodiments, the processor 110 may include one or more interfaces. The interface may include an integrated circuit (inter-integrated circuit, I2C) interface, an integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or may be a wired charger. In some embodiments of wired charging, the charging management module 140 may receive charging input of a wired charger by using the USB interface 130. In some embodiments of wireless charging, the charging management module 140 may receive wireless charging input by using a wireless charging coil of the electronic device 100. When charging the battery 142, the charging management module 140 may further supply power to the electronic device 100 by using the power management module 141.

The power management module 141 is configured to connect to the battery 142, the charging management module 140, and the processor 110. The power management module 141 may receive an input of the battery 142 and/or the charging management module 140, to supply power to the processor 110, the internal memory 121, the display screen 194, the camera 193, the wireless communication module 160, and the like.

The power management module 141 may be configured to monitor performance parameters such as a battery capacity, a battery cycle count, a battery charging voltage, a battery discharging voltage, and a battery state of health (for example, electric leakage and impedance). In some other embodiments, the power management module 141 may be alternatively disposed in the processor 110. In some other embodiments, the power management module 141 and the charging management module 140 may be alternatively disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device 100 may be configured to cover one or more communication frequency bands. Different antennas may also be multiplexed to improve utilization of the antennas. For example, an antenna 1 may be multiplexed as a diversity antenna of a wireless local area network. In some other embodiments, the antenna may be used in combination with a tuning switch.

The mobile communication module 150 may provide a solution to wireless communication such as 2G/3G/4G/5G applicable to the electronic device 100. The mobile communication module 150 may include one or more filters, switches, power amplifiers, low noise amplifiers (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some function modules of the mobile communication module 150 may be disposed in the processor 110. In some embodiments, at least some function modules of the mobile communication module 150 and at least some modules of the processor 110 may be disposed in a same component.

The wireless communication module 160 may provide a solution to wireless communication applicable to the electronic device 100, for example, a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components into which one or more communication processing modules are integrated. The wireless communication module 160 receives an electromagnetic wave through the antenna 2, performs frequency modulation and filtering processing on an electromagnetic wave signal, and sends a processed signal to the processor 110. The wireless communication module 160 may alternatively receive a to-be-sent signal from the processor 110, perform frequency modulation and amplification on the to-be-sent signal, and convert the signal into an electromagnetic wave for radiation by using the antenna 2.

In some embodiments, the antenna 1 and the mobile communication module 150 of the electronic device 100 are coupled, and the antenna 2 and the wireless communication module 160 of the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), and a Beidou navigation satellite system (Beidou navigation satellite system, BDS), a quasi-zenith satellite system (quasi-zenith satellite system, QZSS) and/or a satellite based augmentation system (satellite based augmentation system, SBAS).

The electronic device 100 implements a display function by using the GPU, the display screen 194, the application processor, and the like. The GPU is a microprocessor for image processing, and is connected to the display screen 194 and the application processor. The GPU is configured to perform mathematical and geometric calculations and to render graphics. The processor 110 may include one or more GPUs and execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, quantum dot light emitting diodes (quantum dot light emitting diodes, QLED), and the like. In some embodiments, the electronic device 100 may include one or N display screens 194, and N is a positive integer greater than 1.

The electronic device 100 can implement a photographing function by using the ISP, the camera 193, the video codec, the GPU, the display screen 194, the application processor, and the like.

The ISP is configured to process data fed back by the camera 193. For example, during photographing, a shutter is enabled. Light is transferred to a photosensitive element of the camera through a camera, and an optical signal is converted into an electrical signal. The photosensitive element of the camera transfers the electrical signal to the ISP for processing, and therefore, the electrical signal is converted into an image visible to a naked eye. The ISP may further optimize noise point, brightness, and skin tone algorithms. The ISP may further optimize parameters such as exposure and color temperature of a shooting scene. In some embodiments, the ISP may be disposed in the camera 193.

The camera 193 is configured to capture a static image or a video. An optical image of an object is generated through a camera and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in RGB and YUV formats. In some embodiments, the electronic device 100 may include one or N cameras, and N is a positive integer greater than 1. The N cameras may include a plurality of types of cameras. For example, the N cameras may include a telephoto camera, and one or more of a wide-angle camera, a mid-focus camera, or a time of flight (time of flight, ToF) camera (referred to as a ToF camera below).

An image or a video captured by the camera 193 may be outputted on a mobile phone 100 by the display screen 194, and the digital image can alternatively be stored in the internal memory 121 (or the external memory 120), which is not limited in this embodiment of this application.

The digital signal processor is configured to process a digital signal, and in addition to a digital image signal, may further process another digital signal. For example, when the electronic device 100 performs frequency selection, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor, and quickly processes input information by using a biological neural network structure such as a mode of transmission between human-brain nerve cells, and may further constantly perform self-learning. The NPU may be used to implement an application such as intelligent cognition of the electronic device 100, for example, image recognition, facial recognition, voice recognition, and text understanding. The image collected by using the camera 190 and processed by the ISP and the DSP may be inputted to the NPU, and the NPU recognizes the processed image, including recognizing each individual in the image and the scene recognition.

The external memory interface 120 may be configured to connect to an external storage card such as a micro SD card, to expand a storage capability of the electronic device 100. The external storage card communicates with the processor 110 by using the external memory interface 120, so as to implement a data storage function, such as storing a file such as music or a video in the external storage card.

The internal memory 121 may be configured to store one or more computer programs, and the one or more computer programs include instructions. The processor 110 may execute the instructions stored in the internal memory 121, thereby causing the electronic device 100 to perform a composition recommendation method provided in some embodiments of this application, as well as various functional applications and data processing. The internal memory 121 may include a program storage region and a data storage region. The program storage region may store an operating system; and the program storage region may further store one or more applications (such as photos and contacts) or the like. The data storage region may store data (for example, photos and contacts) created when the electronic device 100 is used. In addition, the internal memory 121 may include a high-speed random access memory, or may further include a non-volatile memory such as one or more magnetic disk memories, flash memories, or universal flash storages (universal flash storage, UFS). In some other embodiments, the processor 110 may execute the instructions stored in the internal memory 121, and/or the instructions stored in the memory arranged in the processor, thereby causing the electronic device 100 to perform a composition recommendation method provided in the embodiments of this application, as well as various functional applications and data processing.

The electronic device 100 may implement an audio function by using the audio module 170, the speaker 170A, the telephone receiver 170B, the microphone 170C, the headset jack 170D, the application processor, and the like, such as music playing or recording.

The audio module 170 is configured to convert digital audio information into an analog audio signal output, and is further configured to convert an analog audio input into a digital audio signal. The audio module 170 may be further configured to encode and decode an audio signal. In some embodiments, the audio module 170 may be disposed in the processor 110, or some function modules of the audio module 170 are disposed in the processor 110.

The speaker 170A, also referred to as a "horn", is configured to convert an audio electrical signal into a sound signal. Music can be listened to or a hands-free call can be answered by using the speaker 170A in the electronic device 100.

The telephone receiver 170B, also referred to as a "receiver", is configured to convert an audio electrical signal into a sound signal. When the electronic device 100 is used to answer a call or receive voice information, the telephone receiver 170B may be put close to a human ear, to receive the voice information.

The microphone 170C, also referred to as a "microphone" or a "microphone", is configured to convert a sound signal into an electrical signal. When making a call or sending voice information, a user may speak with the mouth approaching the microphone 170C, to input a sound signal to the microphone 170C. One or more microphones 170C may be disposed in the electronic device 100. In some other embodiments, two microphones 170C may be disposed in the electronic device 100, to collect a sound signal and implement a noise reduction function. In some other embodiments, three, four, or more microphones 170C may be alternatively disposed in the electronic device 100, to collect a sound signal, implement noise reduction, recognize a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed in the display screen 194. There are a plurality of types of pressure sensors 180A, for example, a resistive pressure sensor, an inductive pressure sensor, and a capacitive pressure sensor. The capacitive pressure sensor may include at least two parallel plates having conductive materials. When force is exerted on the pressure sensor 180A, capacitance between electrodes changes. The electronic device 100 determines strength of pressure based on a change of the capacitance. When a touch operation is performed on the display screen 194, the electronic device 100 detects strength of the touch operation by using the pressure sensor 180A. The electronic device 100 may further calculate a position of the touch based on a detection signal of the pressure sensor 180A. In some embodiments, touch operations that are performed on a same touch position but have different touch operation strength may correspond to different operation instructions. For example, when a touch operation whose touch operation strength is less than a first pressure threshold is performed on an SMS message application icon, an instruction of checking an SMS message is executed. When a touch operation whose touch operation strength is greater than or equal to the first pressure threshold is performed on the SMS message application icon, an instruction of creating a new SMS message is executed.

The gyroscope sensor 180B may be configured to determine a current real-time motion posture of the electronic device 100 (for example, an inclination angle and a position of the electronic device 100). In some embodiments, angular velocities of the electronic device 100 around three axes (that is, an x axis, a y axis, and a z axis) may be determined through the gyroscope sensor 180B. The gyroscope sensor 180B may be used for image stabilization during photographing. For example, when the shutter is pressed, the gyroscope sensor 180B detects an angle at which the electronic device 100 jitters, and calculates, based on the angle, a distance for which a camera module needs to compensate, and allows the camera to cancel the jitter of the electronic device 100 through reverse motion, thereby implementing image stabilization. The gyroscope sensor 180B may also be used in navigation and a motion sensing game scene.

The barometric pressure sensor 180C is configured to measure barometric pressure. In some embodiments, the electronic device 100 calculates an altitude by using a barometric pressure value measured by the barometric pressure sensor 180C, to assist in positioning and navigation.

The magnetic sensor 180D includes a Hall effect sensor. The electronic device 100 may detect opening and closing of a flip cover or a leather case by using the magnetic sensor 180D. In some embodiments, when the electronic device 100 is a clamshell phone, the electronic device 100 may detect opening and closing of a flip cover based on the magnetic sensor 180D. Further, based on a detected opening or closing state of the leather case or a detected opening or closing state of the flip cover, a feature such as automatic unlocking of the flip cover is set.

The acceleration sensor 180E may detect magnitudes of acceleration of the electronic device 100 in various directions (generally on three axes). When the electronic device 100 is stationary, a magnitude and a direction of gravity may be detected. The acceleration sensor may be further configured to recognize a posture of the electronic device, and is applied to switching between landscape orientation and portrait orientation, and applied to an application such as a pedometer.

The distance sensor 180F is configured to measure a distance. The electronic device 100 may measure a distance through infrared or laser. In some embodiments, in a photographing scene, the electronic device 100 may measure a distance by using the distance sensor 180F, to implement quick focusing.

The optical proximity sensor 180G may include, for example, a light-emitting diode (LED) and an optical detector such as a photodiode. The light emitting diode may be an infrared light emitting diode. The electronic device 100 may emit infrared light by using the light-emitting diode. The electronic device 100 detects infrared reflected light from a nearby object by using the photodiode. When detecting sufficient reflected light, the electronic device 100 may determine that there is an object near the electronic device 100. When detecting insufficient reflected light, the electronic device 100 may determine that there is no object near the electronic device 100. The electronic device 100 may detect, by using the optical proximity sensor 180G, that a user holds the electronic device 100 close to an ear for a call, so that automatic screen-off is implemented to achieve power saving. The optical proximity sensor 180G may alternatively be used in a leather case mode or a pocket mode to automatically unlock or lock the screen.

The ambient light sensor 180L is configured to sense luminance of ambient light. The electronic device 100 may adaptively adjust a luminance of the display screen 194 according to perceived brightness of the ambient light. The ambient light sensor 180L may be further configured to automatically adjust white balance during photo taking. The ambient light sensor 180L may further cooperate with the optical proximity sensor 180G to detect whether the electronic device 100 is in a pocket, so as to prevent an accidental touch.

The fingerprint sensor 180H is configured to collect a fingerprint. The electronic device 100 may implement fingerprint unlock, application lock accessing, fingerprint photographing, fingerprint-based call answering, and the like by using a feature of the collected fingerprint.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 reduces performance of a processor near the temperature sensor 180J, to reduce power consumption and implement heat protection. In some other embodiments, when the temperature is lower than another threshold, the electronic device 100 heats the battery 142, to avoid an abnormal shutdown of the electronic device 100 caused by a low temperature. In some other embodiments, when the temperature is lower than still another threshold, the electronic device 100 boosts an output voltage of the battery 142, to avoid an abnormal shutdown caused by a low temperature.

The touch sensor 180K is also referred to as a "touch device". The touch sensor 180K may be disposed on the display screen 194. The touch sensor 180K and the display screen 194 form a touchscreen, which is also referred to as a "touch control screen". The touch sensor 180K is configured to detect a touch operation performed on or near the touch sensor 180K. The touch sensor may transmit the detected touch operation to the application processor, to determine a touch event type. The touch sensor may provide a visual output related to the touch operation by using the display screen 194. In some other embodiments, the touch sensor 180K may be alternatively disposed on a surface of the electronic device 100, and is located on a position different from that of the display screen 194.

The bone conduction sensor 180M may obtain a vibration signal. In some embodiments, the bone conduction sensor 180M may obtain a vibration signal of a vibration bone of a human vocal-cord part. The bone conduction sensor 180M may alternatively contact a human pulse, and receive a blood pressure beating signal. In some embodiments, the bone conduction sensor 180M may be alternatively disposed in a headset, to form a bone conduction headset. The audio module 170 may obtain a voice signal through parsing based on the vibration signal, of the vibration bone of the vocal-cord part, that is obtained by the bone conduction sensor 180M, to implement a voice function. The application processor may parse heart rate information based on the blood pressure beating signal obtained by the bone conduction sensor 180M, to implement a heart rate detection function.

A key 190 includes a power key, a volume key, and the like. The key 190 may be a mechanical key, or a touch-type key. The electronic device 100 may receive a key input, and generate a key signal input related to user setting and function control of the electronic device 100.

The motor 191 may generate a vibration prompt. The motor 191 may be configured to provide a vibration prompt for an incoming call, and may be further configured to provide a touch vibration feedback. For example, touch operations performed on different applications (for example, photo taking and audio playing) may correspond to different vibration feedback effects. For touch operations performed on different regions of the display screen 194, the motor 191 may also correspond to different vibration feedback effects. Different application scenarios (for example, a time prompt, information receiving, an alarm clock, and a game) may also correspond to different vibration feedback effects. A touch vibration feedback effect may be further customized.

The indicator 192 may be an indicator light, may be configured to indicate a charging state and a battery change, and may be further configured to indicate a message, a missed call, a notification, and the like.

The SIM card interface 195 is configured to connect to a SIM card. The SIM card may be inserted into the SIM card interface 195 or unplugged from the SIM card interface 195, to come into contact with or be separated from the electronic device 100. The electronic device 100 may support one or N SIM card interfaces, and N is a positive integer greater than 1. The SIM card interface 195 may support a Nano SIM card, a Micro SIM card, a SIM card, and the like. A plurality of cards may be simultaneously inserted into the same SIM card interface 195. Types of the plurality of cards may be the same or different. The SIM card interface 195 may also be compatible with different types of SIM cards. The SIM card interface 195 may also be compatible with an external storage card. The electronic device 100 interacts with the network by the SIM card to implement functions such as call and data communication. In some embodiments, the electronic device 100 uses an eSIM, that is, an embedded SIM card. The eSIM card may be embedded in the electronic device 100 and cannot be separated from the electronic device 100.

A software system of the electronic device 100 may use a layered architecture, an event-driven architecture, a microkernel architecture, a micro service architecture, or a cloud architecture. In this embodiment of this application, the software structure of the electronic device 100 is illustrated by using an Android system with a layered architecture as an example.

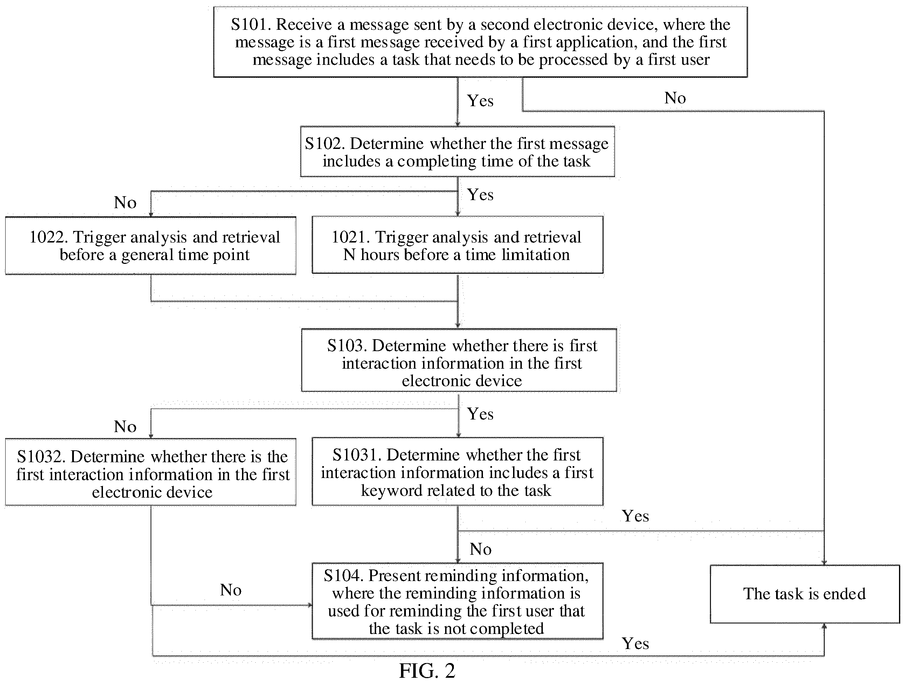

FIG. 2 is a block diagram of the software structure of the electronic device 100 in this embodiment of this application.

In the layered architecture, software is divided into several layers, and each layer has a clear role and task. Layers communicate with each other through a software interface. In some embodiments, the Android system is divided into four layers that are respectively an application layer, an application framework layer, an Android runtime (Android runtime) and system library, and a kernel layer from top to bottom.

The application layer may include a series of application packages.

As shown in FIG. 2, the application packages may include applications such as camera, photos, calendar, phone, maps, navigation, WLAN, Bluetooth, music, videos, and SMS messages.

The application framework layer provides an application programming interface (application programming interface, API) and a programming framework for the applications at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window application. The window manager may obtain a size of a display screen, determine whether there is a status bar, lock the screen, capture the screen, and the like.

The content provider is configured to store and obtain data, so that the data can be accessed by an application. The data may include a video, an image, an audio, calls made and answered, a browsing history and bookmarks, an address book, and the like.

The view system includes a visual control such as a control for text display or a control for picture display. The view system may be configured to construct an application. A display interface may be formed by one or more views. For example, a display interface including an SMS notification icon may include a view for displaying text and a view for displaying a picture.

The phone manager is configured to provide a communication function of the electronic device 100, for example, call state management (including getting through, hang-up, and the like).

The resource manager provides various resources for an application, for example, a localized character string, an icon, a picture, a layout file, and a video file.

The notification manager enables an application to display notification information on a status bar. The notification information may be a message used to indicate a notification type, and may automatically disappear after a short stay without interacting with a user. For example, the notification manager is configured to notify download completion, a message prompt, and the like. The notification manager may alternatively be a notification that appears on a top status bar of the system in a form of a graph or a scroll bar text, for example, a notification of an application running on the background, or may be a notification that appears on the screen in a form of a dialog window. For example, text information is prompted on a status bar, a prompt tone is made, the electronic device vibrates, or an indicator light flashes.

The Android Runtime includes a kernel library and a virtual machine. The Android runtime is responsible for scheduling and managing the Android system.

The kernel library includes two parts: One part is a performance function that the Java language needs to invoke, and the other part is a kernel library of Android.

The application layer and the application framework layer run on the virtual machine. The virtual machine executes Java files of the application layer and the application framework layer as binary files. The virtual machine is used to execute functions such as object lifecycle management, stack management, thread management, security and exception management, and garbage collection.

The system library may include a plurality of function modules, such as a surface manager (surface manager), a media library (Media Libraries), a three-dimensional graphics processing library (for example, OpenGL ES), and a 2D graphics engine (for example, SGL).

The surface manager is configured to manage a display subsystem, and converge 2D and 3D layers of a plurality of applications.

The media library supports playback and recording of a plurality of common audio and video formats, a static image file, and the like. The media library may support a plurality of audio and video encoding formats, for example, MPEG 4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawings.

The kernel layer is a layer between hardware and software. The kernel layer includes at least a display drive, a camera drive, an audio drive, and a sensor drive.

The following illustrates working processes of software and hardware of the electronic device 100 with reference to an image capturing or photographing scenario.

When the touch sensor 180K receives a touch operation, a corresponding hardware interrupt is sent to the kernel layer. The kernel layer processes the touch operation into an original input event (including information such as coordinates of a touch and a time stamp of the touch operation). The original input event is stored at the kernel layer. The application framework layer obtains the original input event from the kernel layer, and recognizes a control corresponding to the input event. Using an example in which the touch operation is a touch/click operation, and a control corresponding to the click operation is a control of a camera application icon. The camera application invokes an interface of the application framework layer to start a camera application, then starts a camera driver by invoking the kernel layer, and captures a static image or a video by using the camera 193.

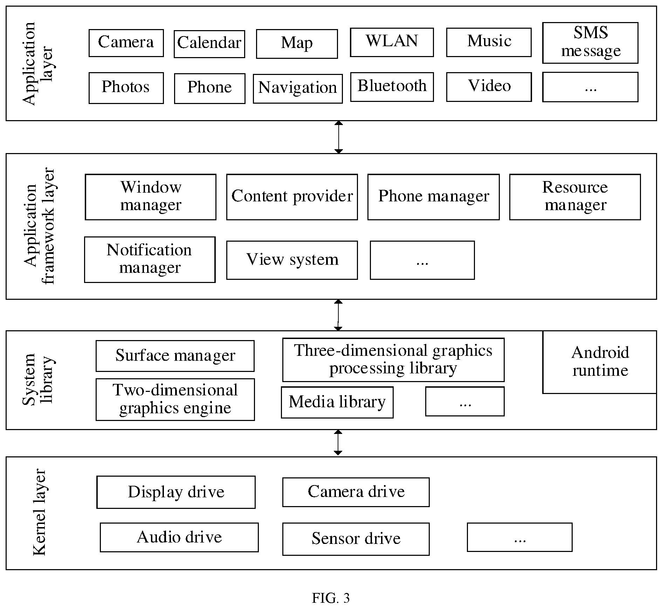

For example, an intelligent reminding method provided in an embodiment of this application is applicable to a first electronic device, and a schematic flowchart is shown in FIG. 3. The method includes:

Step 101. Receive a message sent by a second electronic device, where the message is a first message received by a first application, and the first message includes a task that needs to be processed by a first user.

The first electronic device used by the first user receives the first message by the first application, where the first message is a message sent by the second electronic device used by a second user. The first application is an application that can receive messages such as SMS, WeChat, QQ, or Email. The first message may be a message sent by SMS or an instant messaging application such as WeChat or QQ. For example, the message is a new message received by the electronic device, and the user does not reply after clicking and viewing the message. The first message includes a task, and the task needs to be processed by the first user. For example, the first user receives an SMS message or an email reading "Attend a conference in the conference room at 9 o'clock today", and the user needs to process the message after receiving the message.

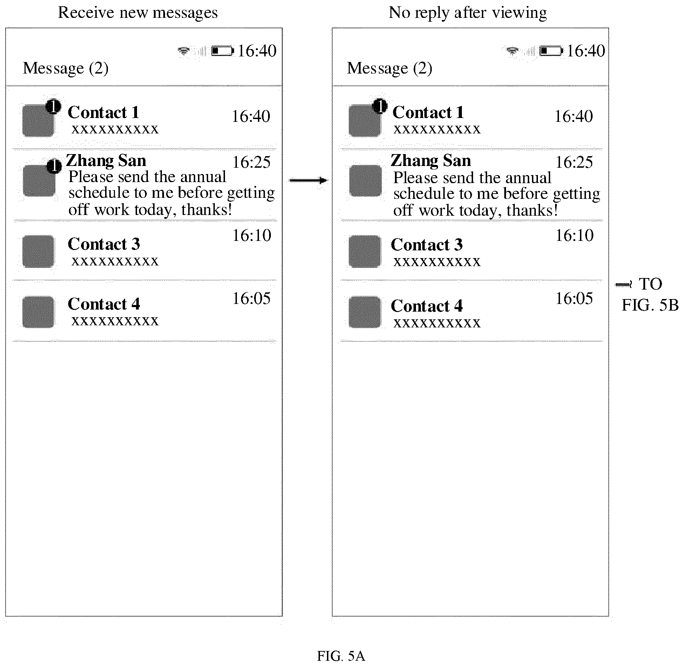

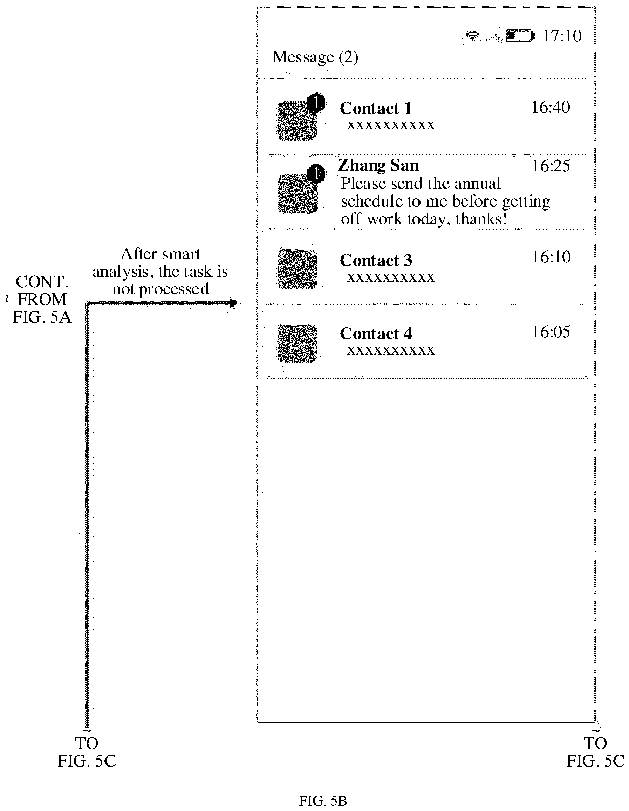

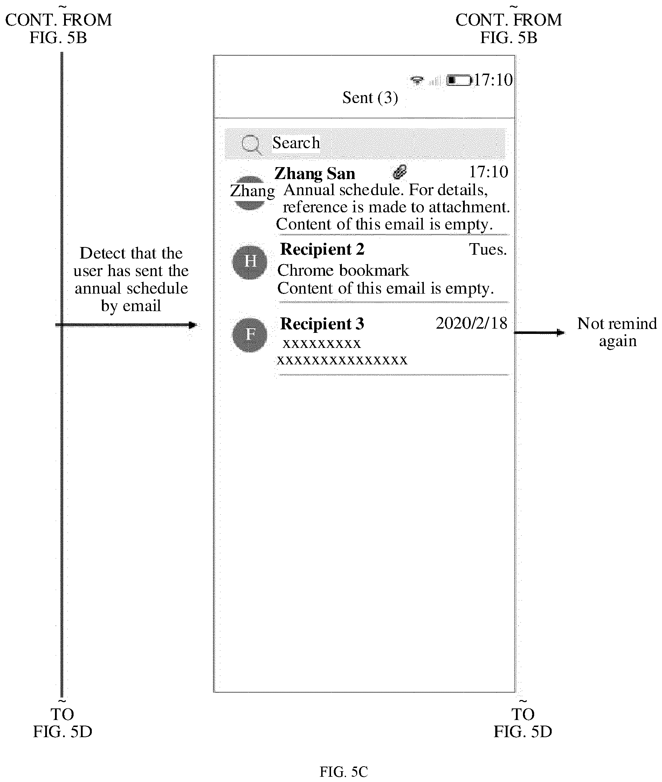

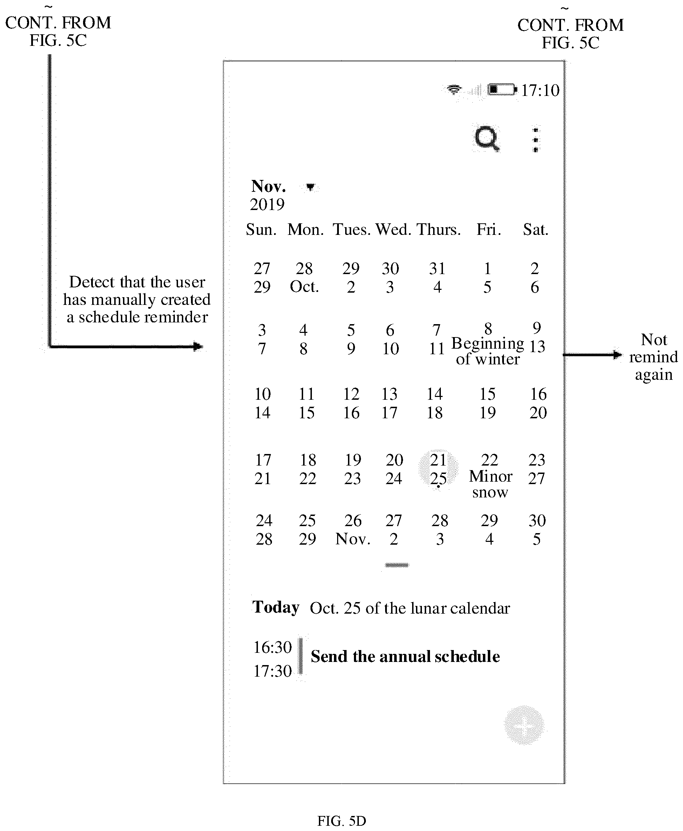

The first electronic device being a mobile phone is used as an example. The message is that the first user receives a new message from a contact (that is, a second user). Referring to FIG. 5A, FIG. 5B, FIG. 5C, and FIG. 5D, a new message is sent by a mobile contact Zhang San at 16:25. Text content of the new message is "Please send the annual schedule to me before getting off work today, thanks.". After clicking and viewing the new message, the first user does not reply, but a mark of the message has changed from unread to read. The message includes a task of "sending the annual schedule to Zhang San", which needs to be processed by the first user after the first user receives the message.

Whether the task needs to be processed by the user is determined according to whether there are a task requirement and a time limitation in the received message and whether the task requirement indicates that the user needs to further process the task, such as breaking down the task, performing the task, setting a task expiration reminder, communicating with a contact assigning the task, or the like. In many cases, a task has a time node for completion, for example, the SMS message shown in FIG. 5A, FIG. 5B, FIG. 5C, and FIG. 5D reading, "Please send the annual schedule to me before getting off work today, thanks!". The time node is before getting off work today, that is, there is a time limitation in the received message with which the user is expected to complete the task. In still some cases, the message does not include an explicit time limitation with which the user is expected to complete the task. For example, the user receives a message reading "After the research report on AI technology development is finished, send a copy to me.". There is only a task requirement in the message and there is no time limitation.

If a determination result in the step 101 is that the first message does not include a task that needs to be processed by the first user, then the process ends.

Step 102. Determine whether the first message includes a completing time of the task

If it is determined in the step 101 that the first message includes a task that needs to be processed by the first user, optionally, the first electronic device performs the step 102, to further determine whether the first message includes the completing time of the task. If the completing time of the task is included, then there is a time limitation on the task, and step 1021 is further performed. The step 1021 is to trigger analysis and retrieval N hours before the time limitation. If the first message does not include the completing time of the task, then there is no time limitation on the task, and step 1022 is further performed. The step 1022 is to trigger analysis and retrieval before a general time point (for example, 20:00 every day). When the step 1022 is performed, it can be ensured that a task without a clear time limitation is not forgotten by the user, and the user is provided with a periodic reminder of the task. The N hours before the time limitation and the general time point are set by the user or set by default in the system. The N hours may be either durations of complete hours such as 1 hour, 2 hours, 3 hours, or the like, or durations which are accurate to minutes such as 0.1 hours, 0.25 hours, 0.5 hours, or the like. The general time point is a time point that is accurate to hours or minutes.

For example, the triggering analysis and retrieval is specifically to trigger determining of the interaction information in step 103. The first user receiving the message reading "After the research report on AI technology development is finished, send a copy to me" is used as an example. The message does not include a completing time of the task, and then it is determined whether there is the first interaction information in the first electronic device at a preset time point after the first message is received.

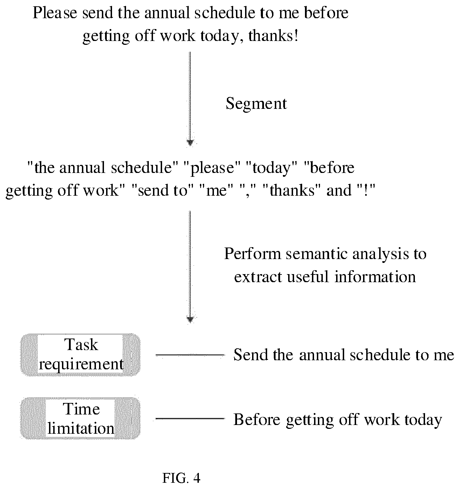

In some embodiments, the task and the completing time of the task in the foregoing steps 101 to 102 are obtained by semantic analysis on the received messages. Specifically, the first electronic device smartly analyzes the message according to a semantic analysis method, and for details of the semantic analysis method, reference is made to FIG. 4. First, the received message is segmented, all possible words matching a lexicon are segmented out, and then an optimal segmentation result is determined by applying a statistical language model. After the message content is segmented, a term weighting method is used to extract keywords from a short text to obtain "task requirement" and "time limitation". Still the first electronic device being a mobile phone is used as an example. The content of the new message sent by Zhang San at 16:25 is segmented. For example, "annual schedule" may be segmented into "annual schedule" or "annual" and "schedule". An optimal segmentation result obtained by applying the statistical language model to the message is "the annual schedule", "please", "today", "before getting off work", "send to", "me", ",", "thanks", and "!". After the semantic analysis is performed on the new message sent by Zhang San at 16:25, the obtained "task" is "send the annual schedule to me", which is referred to as a task Abriefly in this embodiment. A first keyword of the task A is the annual schedule. The completing time or time limitation for the task A is "before getting off work today". In this case, the user's mobile phone performs the step 1021, to trigger the analysis and retrieval 1 hour before getting off work according to the extracted "time limitation" and user setting.

Step 103. Determine whether there is first interaction information in the first electronic device, where
an occurrence time of the first interaction information is later than a time point when the first message is received, and an interaction object of the first interaction information is a second user operating the second electronic device.

If it is determined in the step 101 that the first message includes a task that needs to be processed by the first user, the first electronic device may not perform the step 102, but directly further perform the step 103, to retrieve whether there is interaction information with the second user in the first electronic device after receiving the message.

The interaction information includes, but is not limited to, a call record between the first user and the second user, a chat record between the first user and the second user on a social application, and an email sent by the first user to the second user. The task shown in FIG. 5A, FIG. 5B, FIG. 5C, and FIG. 5D being "send the annual schedule" is used as an example. The interaction information may be that the first user sends the annual schedule to the second user "Zhang San" by Email. If the task is "attend a conference in the conference room", the interaction information may be an SMS message with which the user replies, and the content of the SMS message is "received" or "OK".

The determining whether there is first interaction information in the first electronic device includes: searching for whether there is the first interaction information in the first application. Optionally, the determining whether there is first interaction information in the first electronic device may further include: searching for whether there is the first interaction information in a second application. The second application includes, but is not limited to, an application that can receive messages such as SMS, WeChat, QQ, and Email.

In a specific embodiment, the electronic device obtains detailed information of a contact who sends a message by querying a server that is communicatively connected to the electronic device, including a name, a phone number, and an email address of the contact, further obtains information of the contact in other communication software, and retrieves whether there is a call record or task record with the contact in this application and other applications.

Specifically, the electronic device sends an instruction to the server, and sends personal information of the contact to the server to obtain the detailed information of the contact. In addition to the phone number, the name, and the email address, the detailed information may further include the foregoing or more information noted under the contact's name. On this basis, the electronic device further obtains information of the contact in other communication software, such as a nickname and number in WeChat, QQ, and Welink.

After the phone number of the contact is obtained, a call record of the electronic device is matched to detect whether a call is made to the contact after a period of time after receiving the message. After the email address of the contact is obtained, it is searched for whether the user sends an email to the contact after a period of time after receiving the message. If an email sent by the user to the contact is found, it is further determined whether the task is mentioned in the content of the email.

All instant messaging software in the electronic device is retrieved, such as WeChat, QQ, and Espace. By comparing calls or emails, it is queried whether the user has a message dialog with the contact after a period of time after receiving the message. If yes, it is further determined whether the message dialog is about the task.

If a determination result in the step 103 is that after the information is received, there is interaction information with the second user operating the second electronic device in the first electronic device, then the step 1031 is further performed. The step 1031 is to determine whether the first interaction information includes a first keyword related to the task, that is, determine whether the interaction between the first user and the second user is related to the content and/or task mentioned in the message received by the first user. If a determination result in the step 1031 is that the first interaction information includes a first keyword related to the task, that is, the interaction is related to the content and/or task mentioned in the message received by the user, then the task is ended.

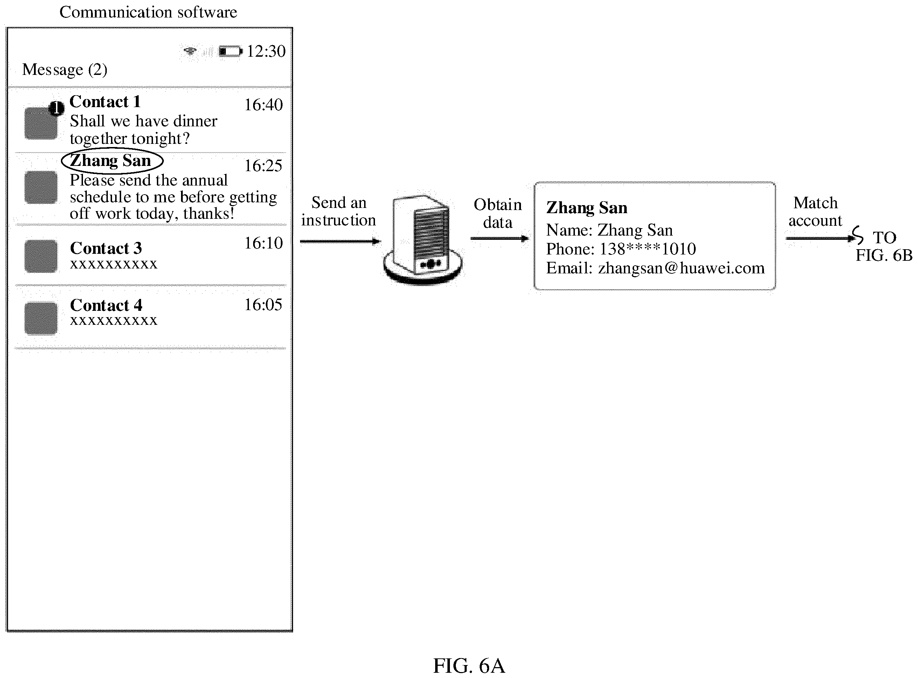

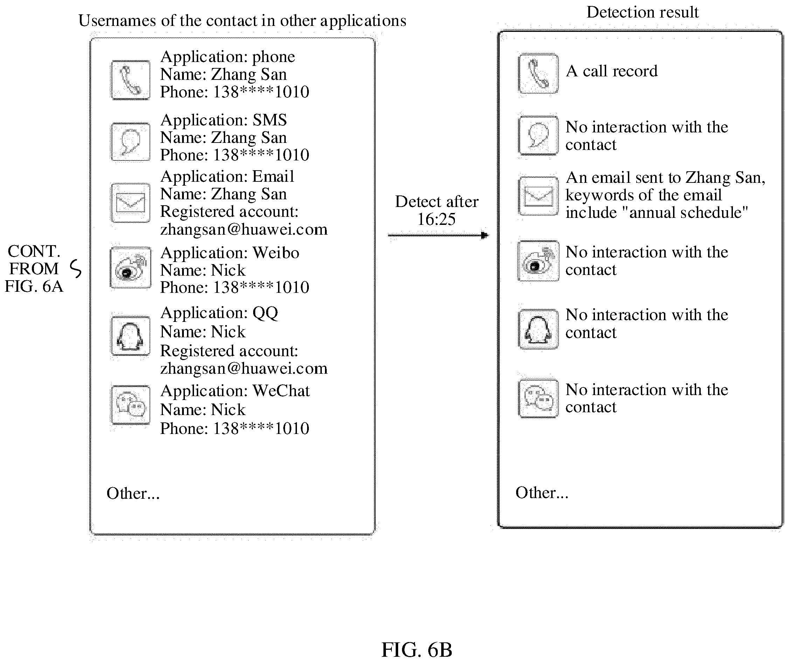

A situation of "detecting that the user has sent the annual schedule by Email" shown in FIG. 5A, FIG. 5B, FIG. 5C, FIG. 5D, FIG. 6A, and FIG. 6B are used as examples to describe how to determine whether there is first interaction information in the first electronic device. FIG. 6A and FIG. 6B show an interaction detection method within a device. First, the first electronic device sends an instruction to the server, and sends personal information of the contact Nick Zhang San to the server to obtain the detailed information of the contact Nick Zhang San, including a phone number, a name, an email address, and the like. The first electronic device may also obtain the foregoing or more information by notes about Zhang San. For example, the notes about the contact Zhang San indicate that the name of the contact Zhang San on Weibo, QQ, and WeChat is Nick. It is obtained that the name of the contact is Zhang San, the phone number is 138**** 1010, and the email address is zhangsan@huawei.com. After an account is matched, it is obtained that the name of the contact Zhang San in applications such as the phone, SMS, and Email is Zhang San, the phone number is 138****1010, the name in applications such as Weibo, QQ, and WeChat is Nick, and registered accounts in QQ and Email are the email address zhangsan@huawei.com or phone number thereof. It can be understood that after the account is matched, accounts of other applications in the mobile phone can be further obtained, which are not exhausted herein.

After the account is matched, in the mobile phone, all instant messaging (instant message, IM) software is further retrieved to detect whether the user interacts with the contact Nick Zhang San after 16:25. For example, the detection result is that after 16:25, a call record with Zhang San and an email sent to Zhang San are retrieved, but the user does not interact with the contact in SMS, Weibo, QQ, and WeChat. That is, the determination result of the step 103 is that there is first interaction information in the first electronic device, and the first interaction information is a call record and an email. Optionally, it is detected that the user sends the annual schedule to Zhang San at 17: 10 in the Email of the first user in the mobile phone, and then the step 1031 may be further performed. The title, content, and attachment name of the email are extracted in the mobile phone, and after semantic analysis is performed, it is determined that the email includes "the annual schedule", that is, includes the first keyword of the task A. If the determination result in the step 1031 is that the first user has completed the task A, then the mobile phone no longer performs reminding for the task.

Optionally, if the determination result in the step 103 is that there is no interaction information with the second user in the first electronic device, then the step 1032 of determining whether there is the first interaction information in a third electronic device is performed. If there is information about task-related interaction between the first user and the second user in the third electronic device, then the task is ended and the user is no longer reminded. The first electronic device and the third electronic device are electronic devices logging in to a same user account.

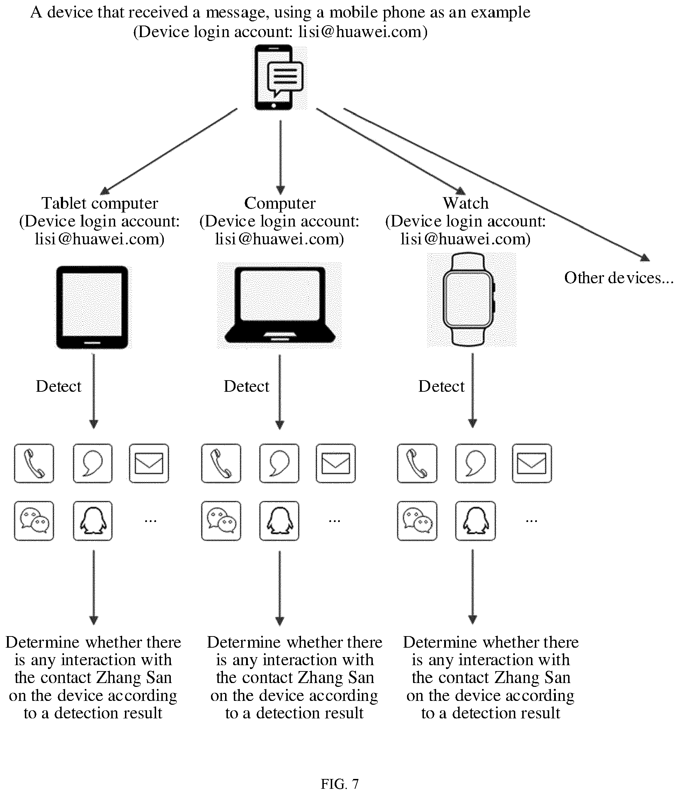

The situation in which "after smart analysis, the task is not processed" shown in FIG. 5A, FIG. 5B, FIG. 5C, and FIG. 5D and FIG. 7 are used as examples to describe how to determine whether there is the first interaction information in the third electronic device. The first electronic device does not retrieve any direct interaction with the mobile contact Nick Zhang San about the task A, and the first electronic device may directly remind the user that the task is not processed. Certainly, the mobile phone may further choose to further perform step 1032, that is, to retrieve whether there is interaction with the contact in other electronic devices associated with the user. In this way, the effectiveness and intelligence of the information reminding can be further improved.

Other electronic devices associated with the user are also referred to as distributed devices. As shown in FIG. 7, the distributed devices use the user account as determining basis, and devices logging in to the same account are all considered as the electronic devices of the same user. The interaction detection method on these associated electronic devices is the same as the interaction detection method within a device shown in FIG. 6A and FIG. 6B, which is to retrieve IM software such as the phone, SMS, Email, WeChat, QQ, or the like, and details are not repeated herein. The distributed devices further include a tablet computer, a computer, a watch, and other devices, and all the distributed devices log in to an account lisi@huawei.com. When the mobile phone does not retrieve any direct interaction between the mobile phone and the contact Nick Zhang San about the task A, the mobile phone continues to retrieve all the distributed devices of the user, and determines whether there is interaction with the contact Zhang San in the device according to the detection result. For example, if it is detected on a computer of the first user that the user has sent the annual schedule to Nick by WeChat, then the result is returned to the mobile phone, and the mobile phone no longer performs reminding for the task.

Step 104. Present reminding information, where the reminding information is used for reminding the first user that the task is not completed.

If the determination result in the step 103 is that there is no first interaction information in the first electronic device, then step 104 is performed subsequently, to present the reminding information on the first electronic device to remind the first user that the task is not completed. If the first message includes the completing time of the task, that is, there is a time limitation on completion of the task, then reminding information is presented before the completing time to remind the first user that the task is not completed.

Alternatively, if a determination result in the step 1031 is that the first interaction information does not include a first keyword related to the task, that is, the interaction is not related to the content and/or task mentioned in the message received by the user, then the step 104 is performed, to present the reminding information on the first electronic device to remind the first user that the task is not completed.

Alternatively, if it is determined in the step 1032 that there is not the first interaction information in the first electronic device, the reminding information is presented in a case that there is not the first interaction information in the third electronic device either, where the reminding information is used for reminding the first user that the task is not completed.

If no direct interaction information with the mobile contact Nick Zhang San is retrieved, then the first electronic device performs the step 104 to remind the user again before the user gets off work. As shown in FIG. 5A, FIG. 5B, FIG. 5C, and FIG. 5D, after user equipment, namely, the electronic device performs smart analysis on the message, it is determined that the task in the message is not processed, and a duplicate reminding mark (that is, a second identifier of this application) appears in an information interface used for receiving the message. The duplicate reminding mark may change the read message from Zhang San into an unread message, which is the same as a mark (that is, a first identifier of this application) of the unread message (that is, a third message of this application) from a contact 1. The duplicate reminding mark may also be different from the mark of the unread message. For example, the marks may be distinguished by different colors. The unread message from the contact 1 may be marked in red, and the unread message for which reminding is performed again may be marked in orange. A person skilled in the art may understand that the duplicate reminding mark and the mark of the unread message are distinguished by using, but not limited to, different colors, and different shapes, sizes, graphics, or prompt sounds may be further used.

It can be seen that the method of this embodiment of this application is applicable to an electronic device. In a case that the user fails to process the task or reply to the message in time because the user is busy when clicking and viewing the new message, or even forgets the task in the message after a period of time, the electronic device may automatically activate an expiration reminder of the task. By interaction determining, the electronic device may help the user manage the to-be-processed task, and remind the user again before the time limitation, to prevent the user from omitting the task. In addition, because the interaction determining performed by the method is not merely limited to other applications of the current device, and the method further performs the interaction determining on other associated electronic devices of the user, so that repeated reminding of the task can be reduced and the accuracy and effectiveness of reminding the user are greatly improved.

In some embodiments, a situation of "detecting that the user has manually created a schedule reminder" is shown in FIG. 5A, FIG. 5B, FIG. 5C, and FIG. 5D. If the mobile phone has detected that the user has manually created a schedule reminder in a calendar or other reminding applications, to avoid repeated reminding, the mobile phone no longer performs reminding for the task A.

The schedule reminder may be determined before the step S103 of determining whether there is first interaction information in the first electronic device. The first electronic device receives a message sent by the second electronic device. After analysis, the message includes a task that needs to be processed by the first user, and then it is further determined whether there is a schedule reminder about the task in the first electronic device. The step 103 of determining whether there is the first interaction information in the first electronic device is performed when there is not the schedule reminder about the task in the first electronic device.

The schedule reminder may also be determined after it is determined whether there is first interaction information in the first electronic device. It is further determined whether there is a schedule reminder about the task in the first electronic device when it is determined that there is no first interaction information in the first electronic device. The reminding information is presented when there is not the schedule reminder about the task in the first electronic device, where the reminding information is used for reminding the first user that the task is not completed.

The schedule reminder may also be determined after the reminding information is presented when there is not the first interaction information in the first electronic device. Generally, if the user does not turn off the reminder after receiving the reminder, the electronic device may remind again after a period of time. To avoid repeated reminding, after the reminding information is presented, the first electronic device further determines whether there is the schedule reminder about the task in the first electronic device. Presenting the reminding information that is used for reminding the user that the task is not completed is skipped when there is the schedule reminder about the task in the first electronic device.

Each of the foregoing determining sequences of the schedule reminder and the interaction information may avoid repeatedly reminding the user to a certain extent, so that the intelligence of the task reminding is improved.

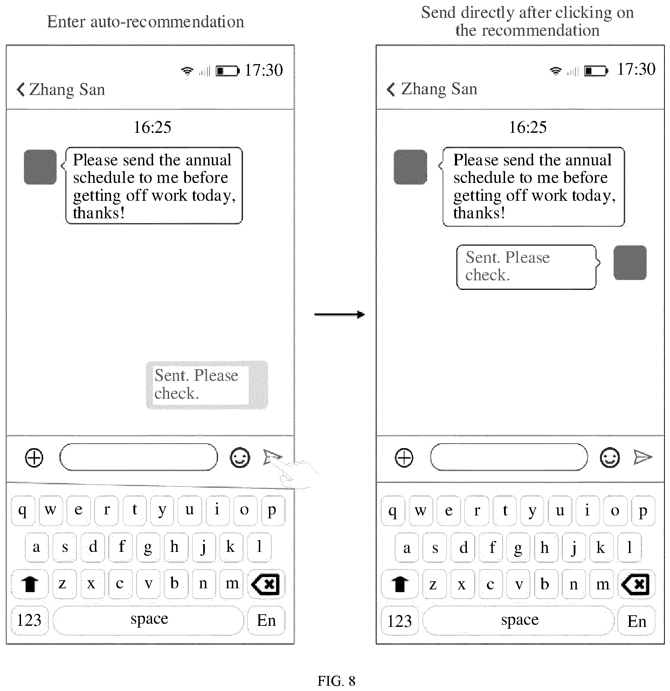

In some other embodiments, the first electronic device further has an input recommendation function. After the mobile phone and the distributed devices that log in to the same account are traversed and retrieved, the result indicates that the user has completed the task. If the user has sent the annual schedule to Zhang San/Nick in an application such as WeChat, QQ, or Email, but does not receive a reply from Zhang San/Nick in the corresponding application, referring to FIG. 8, when the user re-enters a chat interface of the application where the message is received, the first electronic device recommends related words and phrases (that is, the second message of this application) such as "completed and please check" in an input candidate box of the application. After the user clicks, sending is directly completed. Optionally, after retrieving and finding that the user has completed the task, the electronic device may further automatically send the recommended words and phrases indicating that the task is completed. Optionally, if Zhang San sends a message including a to-do task to the user by the first application, after the user sends the annual schedule to Zhang San by the second application, the message may be automatically sent to Zhang San in the first application, and Zhang San is reminded to receive and view a file in the second application in the message. For example, the SMS message that Zhang San sends to the user is "Please send the annual schedule to me before getting off work today, thanks!" After completing the annual schedule, the user sends the annual schedule to Zhang San's mailbox by email. In this case, an SMS message may be automatically sent to Zhang San's mobile phone, and content of the SMS message is "The annual schedule has been completed. Please receive the email.".

It may be understood that to implement the foregoing functions, the electronic device includes corresponding hardware structures and/or software modules for performing the functions. A person skilled in the art should be easily aware that, in combination with algorithm steps of the examples described in the embodiments disclosed in this specification, this application can be implemented by hardware or a combination of hardware and computer software. Whether a function is performed by hardware or computer software driving hardware depends on particular applications and design constraints of the technical solutions. A person skilled in the art may use different methods to implement the described functions for each particular application, but it should not be considered that the implementation goes beyond the scope of this application.

In the embodiments of this application, function modules of the electronic device may be divided based on the foregoing method example. For example, each function module may be divided according to each function, or two or more functions may be integrated into one processing module. The integrated module is implemented in the form of hardware, or is implemented in the form of a software functional module. It should be noted that module division in this embodiment of this application is an example and is merely logical function division. During actual implementation, there may be another division manner.

An embodiment of this application discloses an electronic device, including a processor, and a memory, an input device, and an output device that are connected to the processor. The input device and the output device may be integrated into one device. For example, a touch sensor may be used as the input device, a display screen may be used as the output device, and the touch sensor and the display screen may be integrated into a touchscreen.

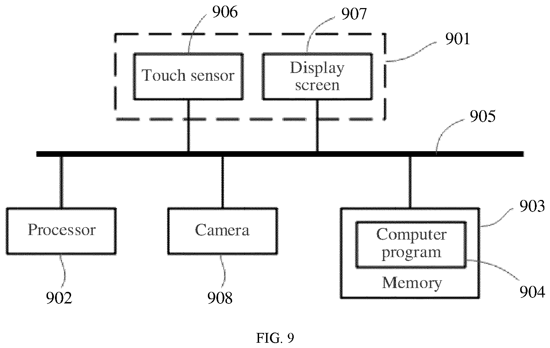

In this case, as shown in FIG. 9, the electronic device may include: a touchscreen 901, where the touchscreen 901 includes a touch sensor 906 and a display screen 907; one or more processors 902; one or more cameras 908; a memory 903; one or more applications (not shown); and one or more computer programs 904. The components may be connected by using one or more communication buses 905. The one or more computer programs 904 are stored in the memory 903 and are configured to be executed by the one or more processors 902. The one or more computer programs 904 include instructions. The instructions are configured to perform steps in the embodiments. All related content of the steps in the foregoing method embodiments may be referenced to function descriptions of corresponding physical devices. Details are not described herein again.

For example, the processor 902 may be specifically the processor 110 shown in FIG. 1, and memory 903 may be specifically the internal memory 116 and/or the external memory 120 shown in FIG. 1, the camera 908 may be specifically the camera 193 shown in FIG. 1, and the display screen 907 may be specifically the display screen 194 shown in FIG. 1, and the touch sensor 906 may be specifically the touch sensor 180K in the sensor module 180 shown in FIG. 1. This is not limited in this embodiment of this application.

This embodiment of this application further provides a computer storage medium. The computer storage medium stores computer instructions, and when the computer instructions are run on an electronic device, the electronic device is caused to perform the related method steps, to implement the photographing method in the foregoing embodiment.

This embodiment of this application further provides a computer program product. When the computer program product is run on a computer, the computer is caused to perform the related method steps, to implement the photographing method in the foregoing embodiment.

In addition, an embodiment of this application further provides an apparatus. The apparatus may be specifically a chip, a component, or a module. The apparatus may include a processor and a memory that are connected. The memory is configured to store computer-executable instructions, and when the apparatus runs, the processor may execute the computer-executable instructions stored in the memory, to cause the chip to perform the photographing method in the foregoing method embodiments.

The electronic device, the computer storage medium, the computer program product, or the chip provided in the embodiments of this application may be configured to perform the corresponding method provided above. Therefore, for beneficial effects that can be achieved, refer to the beneficial effects of the corresponding method provided above. Details are not described herein again.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or part of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electric, mechanical, or other forms.

The units described as separate parts may or may not be physically separate, and parts displayed as units may be one or more physical units, may be located in one place, or may be distributed on different places. Some or all of the units may be selected according to actual needs to achieve the objectives of the solutions of the embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in the embodiments of this application. The foregoing storage medium includes: any medium that can store program code, such as a USB flash drive, a removable hard disk, a ROM (read only memory, ROM), a RAM (random access memory, RAM), a magnetic disk, or an optical disc.

The foregoing contents are merely specific implementations of this application, but are not intended to limit the protection scope of this application. Therefore, the protection scope of this application shall be subject to the protection scope of the claims.

## Claims

1. An intelligent reminding method, applicable to a first electronic device, and comprising:
receiving (S101) a message sent by a second electronic device, wherein the message is a first message received by a first application, and the first message comprises a task that needs to be processed by a first user, wherein the task is determined by semantic analysis of the first message;
searching for whether there is a first interaction information in a second application, wherein an occurrence time of the first interaction information is later than a time point when the first message is received, and an interaction object of the first interaction information is a second user operating the second electronic device; and
presenting reminding information in a case that there is not the first interaction information in the first electronic device, wherein the reminding information is used for reminding the first user that the task is not completed;
wherein the method further comprises:
further determining (S1031) whether the first interaction information comprises a first keyword related to the task in a case that there is the first interaction information in the first electronic device which means determining whether an interaction between the first user and the second user is related to a content and/or task mentioned in the first message; and
presenting the reminding information in a case that the first interaction information does not comprise the first keyword.

2. The method according to claim 1, wherein the first message further comprises a completing time of the task, and the presenting reminding information in a case that there is not the first interaction information in the first electronic device comprises:
presenting the reminding information before the completing time in a case that there is not the first interaction information in the first electronic device.

3. The method according to claim 1, wherein the determining whether there is first interaction information in the first electronic device comprises:
searching for whether there is the first interaction information in the first application.

4. The method according to claim 1, wherein in a case that there is not the first interaction information with the second user in the first electronic device, the method further comprises:
determining whether there is the first interaction information in a third electronic device; and
presenting the reminding information in a case that there is not the first interaction information in the third electronic device either, wherein the reminding information is used for reminding the first user that the task is not completed.

5. The method according to claim 4, wherein the first electronic device and the third electronic device are electronic devices that are logged in to a same user account.

6. The method according to claim 1, wherein the first message does not comprise a completing time of the task, and it is determined whether there is the first interaction information in the first electronic device at a preset time point after the first message is received.

7. The method according to claim 1, wherein before the determining whether there is first interaction information in the first electronic device, the method further comprises:
determining whether there is a schedule reminder about the task in the first electronic device; and
determining whether there is the first interaction information in the first electronic device in a case that there is not the schedule reminder about the task in the first electronic device.

8. The method according to claim 1, wherein after the determining whether there is first interaction information in the first electronic device, the method further comprises:
determining whether there is a schedule reminder about the task in the first electronic device in a case that there is not the first interaction information in the first electronic device; and
presenting the reminding information in a case that there is not the schedule reminder about the task in the first electronic device, wherein the reminding information is used for reminding the first user that the task is not completed.

9. The method according to claim 1, wherein after the presenting reminding information in a case that there is not the first interaction information in the first electronic device, the method further comprises:
determining whether there is a schedule reminder about the task in the first electronic device; and
skipping presenting the reminding information that is used for reminding the first user that the task is not completed in a case that there is the schedule reminder about the task in the first electronic device.

10. The method according to any one of claims 1 to 9, wherein the method further comprises:
displaying a second message in an input candidate box of the first application in a case that there is the first interaction information in the first electronic device, wherein the second message is a message that the first user is recommended to send to the second user, and the second message indicates that the task has been completed.

11. The method according to any one of claims 1 to 9, wherein the first message is a message that has been read but not been replied to.

12. The method according to claim 1, further comprising receiving a third message by the first application, wherein the third message is an unread message, and the third message comprises a first identifier: and the reminding information comprises a second identifier displayed on the first message, and the second identifier is different from the first identifier.

13. The method according to claim 1, further comprising receiving a third message by the first application, wherein the third message is an unread message, and the third message comprises a first identifier; and the reminding information comprises a second identifier displayed on the first message, and the second identifier is the same as the first identifier.

14. An electronic device (100), comprising: one or more processors; (110) and a memory, wherein the memory stores code; and in a case that the code is executed by the electronic device, the electronic device (100) is caused to perform the method according to any one of claims 1 to 13.

## Patentansprüche

1. Intelligentes Erinnerungsverfahren, das auf eine erste elektronische Vorrichtung anwendbar ist und Folgendes umfasst:
Empfangen (S101) einer durch eine zweite elektronische Vorrichtung gesendeten Nachricht, wobei die Nachricht eine durch eine erste Anwendung empfangene erste Nachricht ist, und die erste Nachricht eine Aufgabe umfasst, die durch einen ersten Benutzer bearbeitet werden muss, wobei die Aufgabe durch eine semantische Analyse der ersten Nachricht bestimmt wird;
Suchen, ob erste Interaktionsinformationen in einer zweiten Anwendung vorhanden sind, wobei eine Auftrittszeit der ersten Interaktionsinformationen später als ein Zeitpunkt ist, zu dem die erste Nachricht empfangen wird, und wobei ein Interaktionsgegenstand der ersten Interaktionsinformationen ein Bedienen der zweiten elektronischen Vorrichtung durch einen zweiten Benutzer ist; und
Darstellen von Erinnerungsinformationen, falls die ersten Interaktionsinformationen nicht in der ersten elektronischen Vorrichtung vorhanden sind, wobei die Erinnerungsinformationen zum Erinnern des ersten Benutzers, dass die Aufgabe nicht abgeschlossen ist, verwendet werden;
wobei das Verfahren ferner Folgendes umfasst:
ferner Bestimmen (S1031), ob die ersten Interaktionsinformationen ein erstes Schlüsselwort in Bezug auf die Aufgabe umfassen, falls die ersten Interaktionsinformationen in der ersten elektronischen Vorrichtung vorhanden sind, das heißt, Bestimmen, ob eine Interaktion zwischen dem ersten Benutzer und dem zweiten Benutzer in Bezug zu einem Inhalt und/oder einer Aufgabe, der bzw. die in der ersten Nachricht erwähnt wird, steht; und
Darstellen der Erinnerungsinformationen, falls die ersten Interaktionsinformationen nicht das erste Schlüsselwort umfassen.

2. Verfahren nach Anspruch 1, wobei die erste Nachricht ferner eine Abschlusszeit der Aufgabe umfasst, und das Darstellen von Erinnerungsinformationen, falls die ersten Interaktionsinformationen nicht in der ersten elektronischen Vorrichtung vorhanden sind, Folgendes umfasst:
Darstellen der Erinnerungsinformationen vor der Abschlusszeit, falls die ersten Interaktionsinformationen nicht in der ersten elektronischen Vorrichtung vorhanden sind.

3. Verfahren nach Anspruch 1, wobei das Bestimmen, ob erste Interaktionsinformationen in der ersten elektronischen Vorrichtung vorhanden sind, Folgendes umfasst:
Suchen, ob die ersten Interaktionsinformationen in der ersten Anwendung vorhanden sind.

4. Verfahren nach Anspruch 1, wobei, falls die ersten Interaktionsinformationen mit dem zweiten Benutzer nicht in der ersten elektronischen Vorrichtung vorhanden sind, das Verfahren ferner Folgendes umfasst:
Bestimmen, ob die ersten Interaktionsinformationen in einer dritten elektronischen Vorrichtung vorhanden sind; und
Darstellen der Erinnerungsinformationen, falls die ersten Interaktionsinformationen auch nicht in der dritten elektronischen Vorrichtung vorhanden sind, wobei die Erinnerungsinformationen zum Erinnern des ersten Benutzers, dass die Aufgabe nicht abgeschlossen ist, verwendet werden.

5. Verfahren nach Anspruch 4, wobei die erste elektronische Vorrichtung und die dritte elektronische Vorrichtung elektronische Vorrichtungen sind, die in einem gleichen Benutzerkonto angemeldet sind.

6. Verfahren nach Anspruch 1, wobei die erste Nachricht keine Abschlusszeit der Aufgabe umfasst, und bestimmt wird, ob die ersten Interaktionsinformationen in der ersten elektronischen Vorrichtung zu einem voreingestellten Zeitpunkt, nachdem die erste Nachricht empfangen wird, vorhanden sind.

7. Verfahren nach Anspruch 1, wobei vor dem Bestimmen, ob erste Interaktionsinformationen in der ersten elektronischen Vorrichtung vorhanden sind, das Verfahren ferner Folgendes umfasst:
Bestimmen, ob eine Planungserinnerung über die Aufgabe in der ersten elektronischen Vorrichtung vorhanden ist; und
Bestimmen, ob die ersten Interaktionsinformationen in der ersten elektronischen Vorrichtung vorhanden sind, falls die Planungserinnerung über die Aufgabe nicht in der ersten elektronischen Vorrichtung vorhanden ist.

8. Verfahren nach Anspruch 1, wobei nach dem Bestimmen, ob erste Interaktionsinformationen in der ersten elektronischen Vorrichtung vorhanden sind, das Verfahren ferner Folgendes umfasst:
Bestimmen, ob eine Planungserinnerung über die Aufgabe in der ersten elektronischen Vorrichtung vorhanden ist, falls die ersten Interaktionsinformationen nicht in der ersten elektronischen Vorrichtung vorhanden sind; und
Darstellen der Erinnerungsinformationen, falls die Planungserinnerung über die Aufgabe nicht in der ersten elektronischen Vorrichtung vorhanden ist, wobei die Erinnerungsinformationen zum Erinnern des ersten Benutzers, dass die Aufgabe nicht abgeschlossen ist, verwendet werden.

9. Verfahren nach Anspruch 1, wobei nach dem Darstellen von Erinnerungsinformationen, falls die ersten Interaktionsinformationen nicht in der ersten elektronischen Vorrichtung vorhanden sind, das Verfahren ferner Folgendes umfasst:
Bestimmen, ob eine Planungserinnerung über die Aufgabe in der ersten elektronischen Vorrichtung vorhanden ist; und
Überspringen eines Darstellens der Erinnerungsinformationen, die zum Erinnern des ersten Benutzers, dass die Aufgabe nicht abgeschlossen ist, verwendet werden, falls die Planungserinnerung über die Aufgabe in der ersten elektronischen Vorrichtung vorhanden ist.

10. Verfahren nach einem der Ansprüche 1 bis 9, wobei das Verfahren ferner Folgendes umfasst:
Anzeigen einer zweiten Nachricht in einem Eingabekandidatenfeld der ersten Anwendung, falls die ersten Interaktionsinformationen in der ersten elektronischen Vorrichtung vorhanden sind, wobei die zweite Nachricht eine Nachricht ist, von der empfohlen wird, dass der erste Benutzer sie an den zweiten Benutzer sendet, und die zweite Nachricht anzeigt, dass die Aufgabe abgeschlossen wurde.

11. Verfahren nach einem der Ansprüche 1 bis 9, wobei die erste Nachricht eine Nachricht ist, die gelesen, jedoch nicht beantwortet wurde.

12. Verfahren nach Anspruch 1, ferner umfassend Empfangen einer dritten Nachricht durch die erste Anwendung, wobei die dritte Nachricht eine ungelesene Nachricht ist, und die dritte Nachricht eine erste Kennung umfasst; und wobei die Erinnerungsinformationen eine zweite Kennung umfassen, die auf der ersten Nachricht angezeigt wird, und sich die zweite Kennung von der ersten Kennung unterscheidet.

13. Verfahren nach Anspruch 1, ferner umfassend Empfangen einer dritten Nachricht durch die erste Anwendung, wobei die dritte Nachricht eine ungelesene Nachricht ist, und die dritte Nachricht eine erste Kennung umfasst; und wobei die Erinnerungsinformationen eine zweite Kennung umfassen, die auf der ersten Nachricht angezeigt wird, und die zweite Kennung dieselbe wie die erste Kennung ist.

14. Elektronische Vorrichtung (100), umfassend: einen oder mehrere Prozessoren; (110) und einen Speicher, wobei der Speicher Code speichert; und wobei, falls der Code durch die elektronische Vorrichtung ausgeführt wird, die elektronische Vorrichtung (100) veranlasst wird, das Verfahren nach einem der Ansprüche 1 bis 13 durchzuführen.

## Revendications

1. Procédé de rappel intelligent, applicable sur un premier dispositif électronique, et comprenant :
la réception (S101) d'un message envoyé par un troisième dispositif électronique, dans lequel le message est un premier message reçu par une première application, et le premier message comprend une tâche qui doit être traitée par un premier utilisateur, dans lequel la tâche est déterminée par analyse sémantique du premier message ;
la recherche concernant le fait qu'il y a, ou qu'il n'y a pas, une première information d'interaction dans une seconde application, dans lequel un temps d'apparition de la première information d'interaction est ultérieur à un instant auquel le premier message est reçu, et un objet d'interaction de la première information d'interaction est un second utilisateur exploitant le deuxième dispositif électronique ; et
la présentation d'une information de rappel dans le cas où il n'y a pas la première information d'interaction dans le premier dispositif électronique, dans lequel l'information de rappel est utilisée pour rappeler au premier utilisateur que la tâche n'est pas achevée ;
dans lequel le procédé comprend en outre :
la détermination supplémentaire (S1031) du fait que la première information d'interaction comprend, ou ne comprend pas, un premier mot-clef connexe à la tâche dans le cas où il y a la première information d'interaction dans le premier dispositif électronique, ce qui signifie la détermination du fait qu'une interaction entre le premier utilisateur et le second utilisateur est connexe à un contenu et/ou une tâche mentionné(s) dans le premier message ; et
la présentation de l'information de rappel, dans le cas où la première information d'interaction ne comprend pas le premier mot-clef.

2. Procédé selon la revendication 1, dans lequel le premier message comprend en outre un temps d'achèvement de la tâche, et la présentation d'une information de rappel dans le cas où il n'y a pas la première information d'interaction dans le premier dispositif électronique comprend :
la présentation de l'information de rappel avant le temps d'achèvement, dans le cas où il n'y a pas la première information d'interaction dans le premier dispositif électronique.

3. Procédé selon la revendication 1, dans lequel la détermination du fait qu'il y a, ou qu'il n'y a pas, une première information d'interaction dans le premier dispositif électronique comprend :
la recherche concernant le fait qu'il y a, ou qu'il n'y a pas, la première information d'interaction dans la première application.

4. Procédé selon la revendication 1, dans lequel, dans le cas où il n'y a pas la première information d'interaction avec le second utilisateur dans le premier dispositif électronique, le procédé comprend en outre :
la détermination du fait qu'il y a, ou qu'il n'y a pas, la première information d'interaction dans un troisième dispositif électronique ; et
la présentation de l'information de rappel dans le cas où il n'y a pas la première information d'interaction dans le troisième dispositif électronique non plus, dans lequel l'information de rappel est utilisée pour rappeler au premier utilisateur que la tâche n'est pas achevée.

5. Procédé selon la revendication 4, dans lequel le premier dispositif électronique et le troisième dispositif électronique sont des dispositifs électroniques dans lesquels une session d'un même compte utilisateur a été ouverte.

6. Procédé selon la revendication 1, dans lequel le premier message ne comprend pas de temps d'achèvement de la tâche, et le fait qu'il y a, ou qu'il n'y a pas, la première information d'interaction dans le premier dispositif électronique à un instant prédéfini après que le premier message est reçu est déterminé.

7. Procédé selon la revendication 1, dans lequel, avant la détermination du fait qu'il y a, ou qu'il n'y a pas, une première information d'interaction dans le premier dispositif électronique, le procédé comprend en outre :
la détermination du fait qu'il y a, ou qu'il n'y a pas, un rappel de planification, concernant la tâche, dans le premier dispositif électronique ; et
la détermination du fait qu'il y a, ou qu'il n'y a pas, la première information d'interaction dans le premier dispositif électronique dans le cas où il n'y a pas le rappel de planification, concernant la tâche, dans le premier dispositif électronique.

8. Procédé selon la revendication 1, dans lequel après la détermination du fait qu'il y a, ou qu'il n'y a pas, une première information d'interaction dans le premier dispositif électronique, le procédé comprend en outre :
la détermination du fait qu'il y a, ou qu'il n'y a pas, un rappel de planification, concernant la tâche, dans le premier dispositif électronique dans le cas où il n'y a pas la première information d'interaction dans le premier dispositif électronique ; et
la présentation de l'information de rappel dans le cas où il n'y a pas le rappel de planification, concernant la tâche, dans le premier dispositif électronique, dans lequel l'information de rappel est utilisée pour rappeler au premier utilisateur que la tâche n'est pas achevée.

9. Procédé selon la revendication 1, dans lequel, après la présentation d'une information de rappel dans le cas où il n'y a pas la première information d'interaction dans le premier dispositif électronique, le procédé comprend en outre :
la détermination du fait qu'il y a, ou qu'il n'y a pas, un rappel de planification, concernant la tâche, dans le premier dispositif électronique ; et
l'omission de la présentation de l'information de rappel, qui est utilisée pour rappeler au premier utilisateur que la tâche n'est pas achevée, dans le cas où il y a le rappel de planification, concernant la tâche, dans le premier dispositif électronique.

10. Procédé selon l'une quelconque des revendications 1 à 9, dans lequel le procédé comprend en outre :
l'affichage d'un deuxième message dans une boîte candidate d'entrée de la première application dans le cas où il y a la première information d'interaction dans le premier dispositif électronique, dans lequel le deuxième message est un message que le premier utilisateur est recommandé d'envoyer au second utilisateur, et le deuxième message indique que la tâche a été achevée.

11. Procédé selon l'une quelconque des revendications 1 à 9, dans lequel le premier message est un message qui a été lu mais auquel aucune réponse n'a été donnée.

12. Procédé selon la revendication 1, comprenant en outre la réception d'un troisième message par la première application, dans lequel le troisième message est un message non lu, et le troisième message comprend un premier identifiant ; et l'information de rappel comprend un second identifiant affiché sur le premier message, et le second identifiant est différent du premier identifiant.

13. Procédé selon la revendication 1, comprenant en outre la réception d'un troisième message par la première application, dans lequel le troisième message est un message non lu, et le troisième message comprend un premier identifiant ; et l'information de rappel comprend un second identifiant affiché sur le premier message, et le second identifiant est le même que le premier identifiant.

14. Dispositif électronique (100), comprenant : un ou plusieurs processeurs (110) ; et une mémoire, dans lequel la mémoire stocke un code ; et, dans le cas où le code est exécuté par le dispositif électronique, le dispositif électronique (100) est amené à réaliser le procédé selon l'une quelconque des revendications 1 à 13.
